# EUROPEAN PATENT SPECIFICATION

(11) **EP 2 867 735 B1**
(45) Date of publication and mention of the grant of the patent: **11.09.2019**
(21) Application number: 13734484.2
(22) Date of filing: 07.06.2013
(51) Int. Cl.: G05B 13/02, F01K 13/02

(54) **A METHOD FOR OPTIMIZATION OF CONTROL AND FAULT ANALYSIS IN A THERMAL POWER PLANT**
VERFAHREN ZUR OPTIMIERUNG DER STEUERUNG UND DER FEHLERANALYSE IN EINER WÄRMEKRAFTANLAGE
PROCÉDÉ D'OPTIMISATION DE LA COMMANDE ET DE L'ANALYSE DES PANNES DANS UNE CENTRALE ÉLECTRIQUE THERMIQUE

(30) Priority: 29.06.2012 IN 2597CH2012
(43) Date of publication of application: 06.05.2015
(73) Proprietor: ABB Schweiz AG, 5400 Baden (CH)
(72) Inventor: GOVINDARAJULU, Sudhakar, 641038 Coimbatore (IN); SUBRAMANIAN, Sankara, 560092 Bangalore (IN); SRINIVASA, Battena, 560016 Bangalore (IN); NESARGI, Sumeet, 560038 Bangalore (IN)
(74) Representative: Zimmermann & Partner Patentanwälte mbB
(86) International application number: PCT/IB2013/001181
(87) International publication number: WO 2014/001864

(56) References cited:
- US-A- 4 027 145
- US-A1- 2002 093 201
- Metso Automation: "D-E-B Coordinated Control for Supercritical Once-Through Steam Generators", Internet, 1 January 2009 (2009-01-01), XP002711248, Retrieved from the Internet: URL:http://www.metsoservices.com/support/a rchive/DocLibrary/DataSheets/Applications/ A-731%20DEB%20Coordinated%20Control%20for% 20Supercritical%20OTSJ.pdf [retrieved on 2013-08-13]

## Description

### FIELD OF INVENTION

The present invention relates to control and fault analysis in a thermal power plant and more particularly to use of a plant data specifications for efficient control and fault analysis of the plant during its normal operation.

### BACKGROUND OF THE INVENTION

Electric power is generated by converting one form of energy into electrical energy. In a thermal power plant, thermal energy is converted into electrical energy. A typical thermal power plant involves a boiler unit, fed by water for steam and fuel-oxygen for heat energy, comprising of one or more furnaces and water circulation system. The steam produced by the boiler is passed through one or more super-heaters and then to the turbine through the throttle valves. After passing through the high pressure turbine, the steam losses it's thermal and pressure energy which is further regained by passing it through super heaters. The steam is then passed through Intermediate and Low pressure turbines to ensure full utilization. Finally, the steam is condensed reheated and circulated back to the boiler through feed water pump. Electrical generators, synchronized to electric grid, are shafted to the turbines and thus electrical power is generated.

The plant is controlled by distributed control system (DCS) and is operated in various modes. The modes of thermal power plant control are Manual mode, Boiler follow mode, Turbine follow mode and coordinated mode. While coordinated mode and Turbine follow mode are the ones used during normal plant operation. The present invention relates to the plant control optimization and fault detection during these modes.

Turbine suppliers furnish data sheet based on their design for different power generation specification (expressed in Mega Watt, MW) and these data sheet specifications serves as inputs for plant startup operation. These datasheets specification are not generally used on a continuous basis by the DCS to provide set-points for the key process values eg throttle pressure, throttle temperature, reheat temperature and drum level. Such datasheet specifications serve as a baseline to gauge the performance of the plant. Thus, there is a potential for datasheet specifications being integrated with the DCS for better control of the plant and to track performance.

Further, in the scenario where the difference in MW generation and the demand is significant, the time taken to reach the demand maybe considerably high. The control procedure also needs to provide for optimization with regard to the time taken by the plant to adjust itself to meet the demand.

Scenarios of control procedures during a demand change and its effect, specifically on a degraded plant (say a degraded furnace) are illustrated to indicate improvement/optimization requirements in control and fault analysis.

### Example 1- Increase in demand from 350 to 700 MW

The throttle pressure and temperature set-points are increased and the super heater and re-heater valves are actuated to increase the pressure and temperature. This leads to sudden decrease in the steam pressure in the boiler and subsequent shrinking effect. The degraded furnace starts acting gradually by increasing the fuel and feed-water input to meet the demand. The coordinated mode takes care of delaying the turbine action based on the boiler response. Thus, the ramp-up time would be considerably high and the degradation of furnace is unnoticed which means less plant efficiency.

### Example 2- Decrease in demand from 750 to 350 MW

The throttle pressure and temperature set-points are decreased and the super heater and re-heater valves are actuated to decrease the pressure and temperature. This leads to sudden increase in the steam pressure in the boiler and subsequent swelling effect. The degraded furnace starts acting gradually by decreasing the fuel and feed-water input to meet the demand. The coordinated mode takes care of delaying the turbine action based on the boiler response. Thus, the ramp-down time would be considerably high and the degradation of furnace is unnoticed which means less plant efficiency and further degradation.

Document US 4,027,145 A describes a system having a first plurality of physical parameters measurable by sensing means, and a second plurality of input control parameters alterable by control means. The present values of the physical parameters are measured, a set of estimates of state variables of the system is developed, the estimates are translated into corresponding estimates of the physical parameters, and the system is controlled to meet requirements. In controlling, the error of the values of the estimates of the physical parameters is predicted, a set of values for the input control parameters is developed, and the values for the input control parameters are coupled to the control means in the system.

There is a need to integrate and use plant equipment datasheet specification with the control system to effectively control during normal operation and in addition have a plant where any degradation or fault can be identified for suitable correction in the control procedure to be affected.

### SUMMARY OF THE INVENTION

As one aspect of the invention, a method comprises the features of claim 1.

The present disclosure includes a method based on use of a plant data specification and periodically updating the plant data specification to efficiently control the plant. The plant data specification contains list of process parameters (input and output values for example set point information and process outputs) for process units including the signal information for actuators. The updates are made use to detect and analyze faults in process units. The method comprises a) obtaining at least one set point information from the provided plant data specification containing list of process parameters and process outputs; b) controlling one or more control loops by providing set points for control based on the obtained one or more set point information from the plant data specification to operate the thermal power plant; c) identifying gaps in controlling the said one or more control loops in the thermal power plant specification and iteratively manipulating at least one set point to meet the demand; d) updating the plant data specification based on the manipulated at least one set point used to meet the demand; and e) using the updated plant data specification for control of the plant to meet the demand.

According to certain aspects, a method to integrate feed forward technique to control the power plant is provided. The method comprises an additional step of providing an additional bias to one or more actuator signal by feed forward control, wherein the additional bias is estimated based on the plant data specification.

Another aspect of the invention is a control system comprising the features of claim 8.

The present disclosure includes a control system that makes use of a plant data specification for control of the power plant. The control system comprises of a database for storing plant data specification with periodic updates (original vendor data and periodic updates on set point values to meet the demand). A set point correction module to track gaps in set points for control of the various control loops to meet a demand and updating the plant data specification; and a decision module to compare the gaps in controlling the various control loops with a predefined threshold to identify fault condition in the process units associated with the various control loops including determining maintenance condition.

According to certain aspects, the control system with integrated feed forward technique using a plant data specification is provided. The control system additionally contains a feed forward signal calculator module to compute feed forward signals based on the plant data specification including actuator signals, demand and generation values. It also has a switch module to provide feed forward signals to respective actuators as an additional bias based on the significance of differences in the demand and actual generation values i.e. provide the additional bias only if the differences are large.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1 is a method to control a thermal power plant;
Figure 2 is an example of a plant data specification used for control of a thermal power plant;
Figure 3 is an illustration of control system with multiple control loops and plant data specification for control of a thermal power plant;
Figure 4 is an illustration for updating the plant data specification;
Figure 5 is an illustration of a control system with integrated feed forward control method.

### DETAILED DESCRIPTION OF THE INVENTION

The invention illustrates a method and a system to integrate and use plant datasheet specifications for control of a thermal power plant.

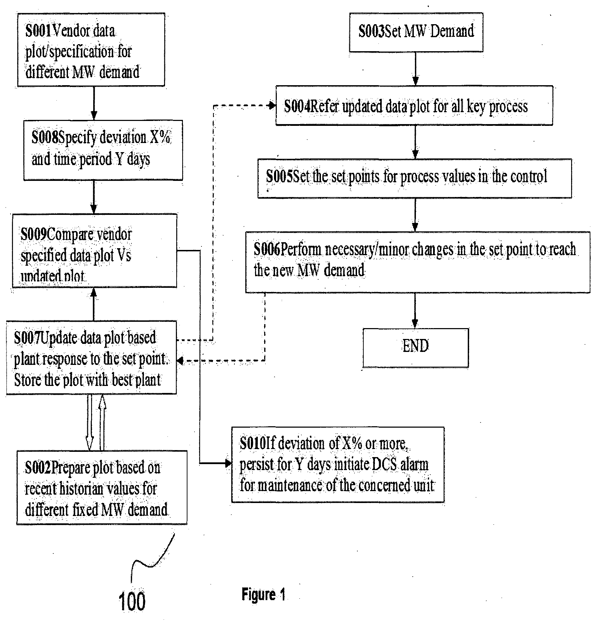

The method is illustrated with help of Figure 1 that lists various steps to make use of the datasheet to detect presence of any fault (substantial degradation) in the plant units.

The datasheet specification is also being referred as plant data specification having further scope to include data that is generated from the plant for the plant control.

### Step S001: have plant unit data specification

Plant unit manufacturers provide datasheets for their units. Eg. Turbine manufactures furnish datasheets with recommendations of the process parameter required for different MW Generation.

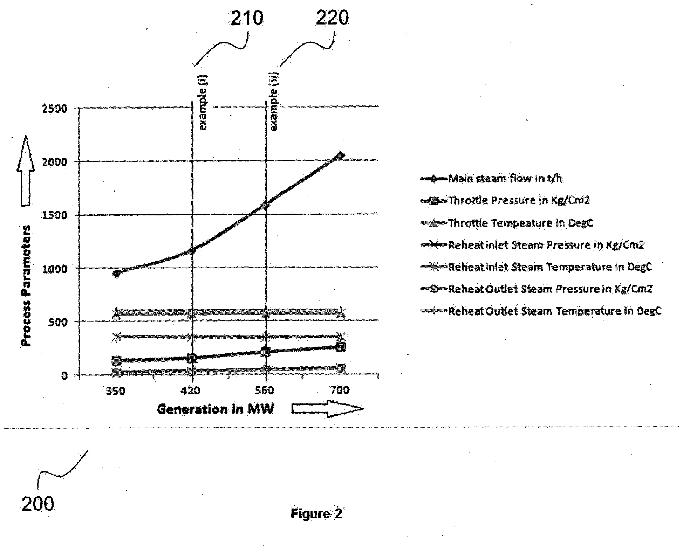

The datasheet could be used to read parameters related with the unit operation. For example, with reference to datasheet plots depicted in Figure 2,
(i) for a 700MW power plant the process parameters for 420 MW generation (210) is as follows
   Main steam flow = 1159 t/h
   Throttle Pressure/Temperature = 158 Kg/cm2 568 DegC
   Reheat inlet steam pressure/Temperature = 25.1 Kg/Cm2 353 DegC
   Reheat inlet steam pressure/Temperature = 33.68 Kg/Cm2 596 DegC
(ii) for a 700MW power plant the process parameters for 560 MW generation (220) is as follows
   Main steam flow = 1590 t/h
   Throttle Pressure/Temperature = 211 Kg/cm2 568 DegC
   Reheat inlet steam pressure/Temperature = 47.4 Kg/Cm2 348 DegC
   Reheat inlet steam pressure/Temperature = 47.4 Kg/Cm2 596 DegC

This data is used as guidelines during plant start up, manually. Once the plant is stabilized, the control loops are put in Auto mode. The invention uses the datasheet specification also during the stabilized mode of the plant.

### Step S002: Prepare plot based on historian value

The historian data of the process parameters and plots of relevant curves for different MW Generation are recorded. These are stored in a database in DCS module as plant data specification. The plant efficiency is determined in-terms of input/output and the best curves with good plant efficiency are stored as an update of the plant data specification. This activity happens on a periodic basis with recent data, ensuring that the curves reflect real plant condition.

### Step S003: Obtain demand information

The MW demand on the power plant is set from the grid (Load distribution centre) based on timings and different consumer demands. The demand information is used along with the plant data specification in the method.

### Step S004-S006: Operate plant to meet the demand using data specification

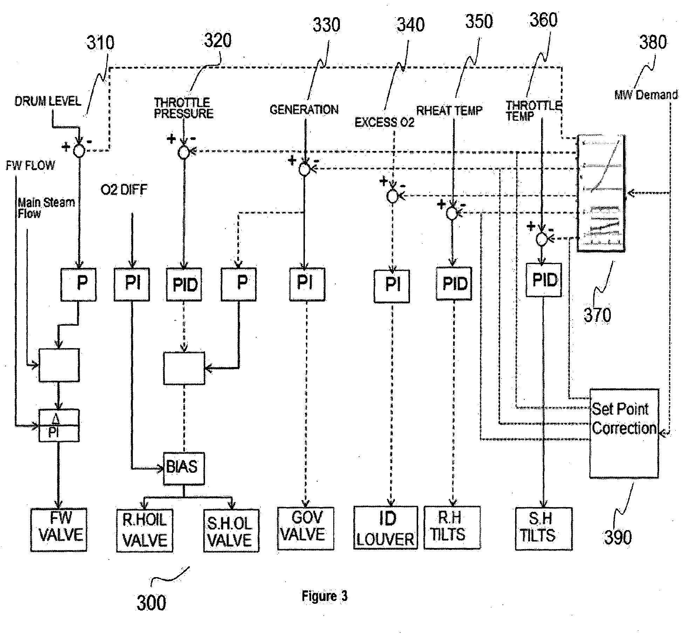

When a new MW demand is set, as a step in this method the set point information from the plant data specification for different processes are obtained. The set point information is used to provide set point that triggers the control loop into action until the process parameter reaches the set point with acceptable deviations. For example, the drum level control loop 310 with a three element controller from Figure 3 is illustrated for operation of the plant providing the control system 300. It receives the drum level set-point from the stored data plots, plant data specification in a database (370) and computes the feed water flow based on Main steam flow / drum level and the current feed water flow. In the same manner, various control loops (320, 330, 340, 350 and 360) to meet a MW demand (380) illustrated in Figure 3 are also operated.

After a predetermined timeframe the power generations would reach the demand with or without deviations. This deviation (gap) is noted and useful for study later on to analyze fault. The set-points for key process values are increased/ decreased iteratively. The steps for increase or decrease can change from plant to plant and decided by process consultants.

This corrections/deviation quantities serves as input to correct the plots generated (thereby reflection the actual plant state) and maybe recorded through a set point correction module 390 for updating the plant data specification.

### Step S007-S010: Detection of degradation

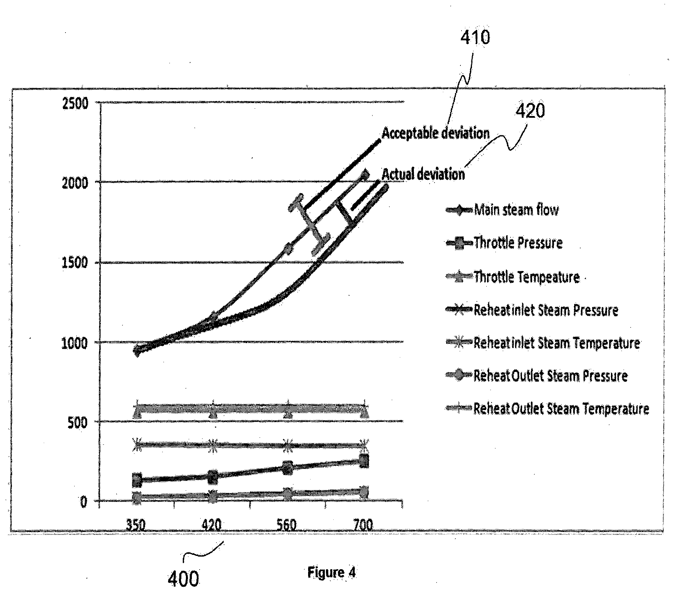

It is usual that the power plant can generate power which almost follows the standard data sheet when the plant is new or successful maintenance is done. However due to various factors the plant equipment starts degrading with time resulting in less MW generation. While this plant state gets updated in the plant data specification, it is easy to identify which part of plant is degraded. This could either call for immediate maintenance if feasible or serve as inputs for maintenance during shutdown. Figure 4 illustrates graphically an instance of an acceptable deviation (410) along with an actual deviation (420) in a process parameter plotted against MW demand. The actual deviations and the time-period of such sustained deviations needs to be specified by process experts.

For thermal power plants, the basic control loops for the key parameters remain unaltered. During engineering, the datasheet information may be provided and the control loops may be tuned during start-up and stabilization of the plant.

It is understood that once a MW demand is set from the grid, the corresponding process value set points are obtained from the updated plant data specification and the power plant is controlled to reach the MW demand with-in possible minimum time.

Thus, the method illustrated through Figure 1, is based on use of plant data specification and periodically updating the plant data specification to efficiently control the plant. The updates are made use to detect and analyze faults. To summarize the method, the method comprises a) obtaining at least one set point information from the provided plant data specification containing list of process parameters and process outputs; b) controlling one or more control loops by providing set points for control based on the obtained one or more set point information from the plant data specification to operate the thermal power plant; c) identifying gaps in controlling the said one or more control loops in the thermal power plant specification and iteratively manipulating at least one set point to meet the demand; d) updating the plant data specification based on the manipulated at least one set point used to meet the demand; and e) using the updated plant data specification for control of the plant to meet the demand.

Another aspect related to efficient control of plant is lead compensation. The following response of the plant may be considered to illustrate dynamic lead compensation in the control loops:
(i) Fast ramp-up/ ramp-down when a new MW is set
(ii) Stable operation without transient overshoot.

There are also scenarios, while the final MW demand (at a particular time in future) is not known and the input from the grid is in small increment/decrement steps. An adaptive feed forward technique is blended with the control method explained above.

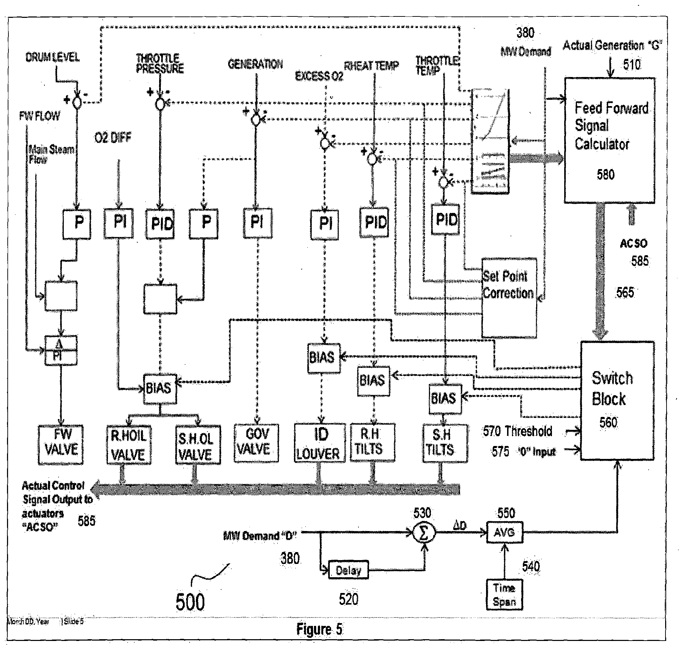

The technique is illustrated with help of Figure 5 that provides a control system 500 with additional modules for integrating feed forward techniques. The MW set point demand "D" (380) is constantly monitored by the control system. Using a pre-determined delay block (520) & summator (530), delta "ΔD" is calculated. This ΔD is averaged over a specified timespan (illustrated with numeral 540 & 550). The output of this AVG block (550) is fed into a switch block 560. The switch block consists of following feed forward input signals: a Zero feed forward control signal input; and a calculated feed forward signal input.

When the average value (absolute value) from the AVG module 550 is greater than the threshold 570 (which means the Set Point (SP) is unstable or changes rapidly) the switch selects the Zero feed forward signal (575) to the output of the critical process actuators. This is done to avoid unstable operation of the plant or transient overshoot

When the average value (absolute value) from the AVG module 550 is less than the threshold value, 570 (which means the SP is stable), the calculated feed forward signal is applied to as bias to the actuators. In this case, the difference between the present set-point and the actual generation is considered such that the feed forward signal is significant during the high difference period and decays out as the difference tends to zero.

The logic for the switch block 560 may be developed using independent fuzzy logic and integrated in the system with a feed forward signal calculator module 580. The plant data specification will also store the actual control signal (585) to actuators for various MW demands. As the set-point stabilizes and the difference between the MW demand (510) and the generation (510) is high, the switching block (560) will calculate the feed-forward signal as follows:
(i) Check for the required output for the specified MW demand.
(ii) Check for the actual output from the loop and determines the real-time differences. This is designated as ACSO (Actual Control Signal Output to actuators), represented by numeral 585 in Figure 5. This means the manipulated actuating signals.
(iii) A factor "X" is multiplied to the difference and added to the controller output from the control system which is sent to I/P (current to position) convertors to activates valves.

As the difference (Demand-Generation) reduces, the feed forward signal decays to zero or switched to zero. The feed forward method is illustrated for a scenario where the plant MW demand is changed from 350 to 700 MW. The throttle pressure and temperature set-points are increased and the super heater and re-heater valves are actuated to increase the pressure and temperature. Meanwhile the feed forward calculates appropriate values and feeds the drum level actuators (feed water input valve) and also regulates the super-heater and re-heater valves. This would lead to smooth integration of boiler and the turbine with less ramp-up time. Also, with such tightly integrated control, the steam temperature is not increased more than required, and hence the need for attemperation is reduced. Hence the plant efficiency is improved and also that faults are reported in time if the system does not respond as expected by the database curves (plant data specification).

Thus, a control system based on the control method using a plant data specification, to comprise of a database for storing plant data specification with periodic updates. A set point correction module to track gaps in set points for control of the various control loops to meet a demand and updating the plant data specification; and a decision module to compare the gaps in controlling the various control loops with a predefined threshold to identify fault condition in the process units associated with the various control loops including determining maintenance condition.

While only certain features of the invention have been illustrated and described herein, many modifications and changes will occur to those skilled in the art without departing from the scope of the appended claims.

## Claims

1. A method for control of a thermal power plant to provide electrical power as per a demand, the thermal power plant comprising process units and one or more actuators, the method comprising:
a) obtaining at least one set point information from a plant data specification providing list of process parameters and process outputs (S001, S002), wherein the plant data specification is provided by a manufacturer of the process units;
b) controlling one or more control loops in the thermal power plant by providing set points for control based on the obtained one or more set point information from the plant data specification to operate the thermal power plant (S005);
c) identifying gaps in controlling the said one or more control loops in the thermal power plant and iteratively manipulating at least one set point to meet the demand (S006);
d) updating the plant data specification based on the manipulated at least one set point used to meet the demand, for detecting and analyzing faults in the process units (S007);
e) providing feed forward signals to the one or more actuators as an additional bias, wherein the additional bias is estimated based on the plant data specification and a significance of a difference between the demand and actual generation values; and
f) using the updated plant data specification and the feed forward signals for control of the thermal power plant to meet the demand (S004).

2. The method of claim 1, wherein the plant data specification includes a list of process parameters for one or more process units.

3. The method of claim 1, wherein the plant data specification includes a list of process parameters with signal information for actuators (585).

4. The method of claim 1, wherein the gaps are identified for one or more control loops by determining differences with reference to the said at least one set point information from the plant data specification (S009).

5. The method of claim 4, wherein the determined differences for one or more control loops is compared with a threshold to identify a condition for maintenance (420) for a process unit associated with the said one or more control loops.

6. The method of claim 4, wherein the determined differences for one or more control loops are used for identifying faults in one or more control loops.

7. The method of claim 1, wherein the method is used during a normal operation of the plant.

8. A control system (300) for a thermal power plant to provide electrical power to meet a demand, the thermal power plant comprising process units and one or more actuators, the control system comprising:
a) A database (370) of a plant data specification providing list of process parameters and process outputs to obtain at least one set point information for providing set point for controlling one or more control loops, wherein the plant data specification is provided by a manufacturer of the process units;
b) A set point correction module (390) to track adjustments in the provided set point based on the at least one set point information to reduce a gap to meet the demand and to update the plant data specification in the database;
c) A feed forward signal calculator module (580) to compute feed forward signals based on the plant data specification including actuator signals (585), demand value (380) and actual generation value (510); and
d) A switch module (560) to provide the feed forward signals to the one or more actuators as an additional bias based on the significance of differences in the demand value and the actual generation value.

## Patentansprüche

1. Verfahren zum Kontrollieren einer Wärmekraftanlage, um elektrische Energie auf einen Bedarf hin bereitzustellen, wobei die Wärmekraftanlage Prozesseinheiten und einen oder mehrere Aktor/en umfasst, wobei das Verfahren umfasst:
a) Erlangen mindestens einer Sollwertinformation aus einer Anlagendatenspezifikationsbereitstellungsliste von Prozessparametern und Prozessausgängen (S001, S002), wobei die Anlagendatenspezifikation von einem Hersteller der Prozesseinheiten bereitgestellt wird;
b) Kontrollieren einer oder mehrere Kontrollschleife/n in der Wärmekraftanlage, indem Sollwerte zur Kontrolle bereitgestellt werden, die auf der einen oder den mehreren erlangten Sollwertinformation/en aus der Anlagendatenspezifikation beruhen, um die Wärmekraftanlage zu betreiben (S005);
c) Erkennen von Lücken beim Kontrollieren der einen oder mehreren Kontrollschleife/n in der Wärmekraftanlage, und iteratives Beeinflussen von mindestens einem Sollwert, um den Bedarf zu decken (S006);
d) Aktualisieren der Anlagendatenspezifikation auf Grundlage des mindestens einen beeinflussten Sollwerts, der zum Decken des Bedarfs verwendet wurde, um Fehler in den Prozesseinheiten zu erfassen und zu analysieren (S007);
e) Bereitstellen von Vorwärtskopplungssignalen an den einen oder die mehreren Aktor/en als Zusatzbeeinflussung, wobei die Zusatzbeeinflussung auf Grundlage der Anlagendatenspezifikation und einer Signifikanz einer Differenz zwischen dem Bedarfs- und dem tatsächlichen Erzeugungswert angesetzt wird; und
f) Verwenden der aktualisierten Anlagendatenspezifikation und der Vorwärtskopplungssignale zum Kontrollieren der Wärmekraftanlage, um den Bedarf zu decken (S004).

2. Verfahren nach Anspruch 1, wobei die Anlagendatenspezifikation eine Liste von Prozessparametern für eine oder mehrere Prozesseinheit/en enthält.

3. Verfahren nach Anspruch 1, wobei die Anlagendatenspezifikation eine Liste von Prozessparametern mit Signalinformationen für Aktoren (585) enthält.

4. Verfahren nach Anspruch 1, wobei die Lücken für eine oder mehrere Kontrollschleife/n erkannt werden, indem Differenzen in Bezug auf die mindestens eine Sollwertinformation aus der Anlagendatenspezifikation bestimmt werden (S009).

5. Verfahren nach Anspruch 4, wobei die für eine oder mehrere Kontrollschleife/n bestimmten Differenzen mit einem Schwellenwert verglichen werden, um eine Bedingung für Wartung (420) für eine Prozesseinheit zu erkennen, die mit der einen oder den mehreren Kontrollschleife/n zusammenhängt.

6. Verfahren nach Anspruch 4, wobei die für eine oder mehrere Kontrollschleife/n bestimmten Differenzen dazu verwendet werden, Fehler in einer oder mehreren Kontrollschleife/n zu erkennen.

7. Verfahren nach Anspruch 1, wobei das Verfahren während eines normalen Betriebs der Anlage verwendet wird.

8. Kontrollsystem (300) für eine Wärmekraftanlage zum Bereitstellen elektrischer Energie, um einen Bedarf zu decken, wobei die Wärmekraftanlage Prozesseinheiten und einen oder mehrere Aktor/en umfasst, wobei das Kontrollsystem umfasst:
a) eine Datenbank (370) einer Anlagendatenspezifikationsbereitstellungsliste von Prozessparametern und Prozessausgängen, um mindestens eine Sollwertinformation zur Sollwertbereitstellung zu erlangen, um eine oder mehrere Kontrollschleife/n zu kontrollieren, wobei die Anlagendatenspezifikation von einem Hersteller der Prozesseinheiten bereitgestellt wird;
b) ein Sollwertberichtigungsmodul (390), um Anpassungen in dem bereitgestellten Sollwert auf Grundlage der mindestens einen Sollwertinformation nachzuverfolgen, um eine Lücke, den Bedarf zu decken, zu reduzieren und die Anlagendatenspezifikation in der Datenbank zu aktualisieren;
c) ein Vorwärtskopplungssignalberechnungsmodul (580), um Vorwärtskopplungssignale auf Grundlage der Anlagendatenspezifikation zu berechnen, die Aktorsignale (585), einen Bedarfswert (380) und den tatsächlichen Erzeugungswert (510) enthält; und
d) ein Schaltmodul (560), um die Vorwärtskopplungssignale an den einen oder die mehreren Aktor/en als Zusatzbeeinflussung auf Grundlage der Signifikanz von Differenzen im Bedarfswert und dem tatsächlichen Erzeugungswert bereitzustellen.

## Revendications

1. Procédé de commande d'une centrale thermique pour fournir de la puissance électrique en fonction d'une demande, la centrale thermique comprenant des unités de processus et un ou plusieurs actionneurs, le procédé comprenant :
a) l'obtention d'au moins une information de point de consigne depuis une liste de mise à disposition d'une spécification de données de centrale de paramètres de processus et de sorties de processus (S001, S002), sachant que la spécification de données de centrale est fournie par un fabricant des unités de processus ;
b) la commande d'une ou de plusieurs boucles de commande dans la centrale thermique en fournissant des points de consigne pour la commande sur la base de l'une ou des plusieurs informations de point de consigne obtenues depuis la spécification de données de centrale pour exploiter la centrale thermique (S005) ;
c) l'identification d'écarts lors de la commande desdites une ou plusieurs boucles de commande dans la centrale thermique et la manipulation itérative d'au moins un point de consigne pour satisfaire la demande (S006) ;
d) la mise à jour de la spécification de données de centrale sur la base de l'au moins un point de consigne manipulé utilisé pour satisfaire la demande, afin de détecter et d'analyser des défauts dans les unités de processus (S007) ;
e) la fourniture de signaux à action directe à l'un ou aux plusieurs actionneurs en tant que biais supplémentaire, sachant que le biais supplémentaire est estimé sur la base de la spécification de données de centrale et d'une importance d'une différence entre la demande et la valeur de production effective ; et
f) l'utilisation de la spécification de données de centrale mise à jour et des signaux à action directe pour la commande de la centrale thermique pour satisfaire la demande (S004).

2. Le procédé de la revendication 1, sachant que la spécification de données de centrale inclut une liste de paramètres de processus pour une ou plusieurs unités de processus.

3. Le procédé de la revendication 1, sachant que la spécification de données de centrale inclut une liste de paramètres de processus avec des informations de signal pour actionneurs (585).

4. Le procédé de la revendication 1, sachant que les écarts sont identifiés pour une ou plusieurs boucles de commande en déterminant des différences par rapport à ladite au moins une information de point de consigne provenant de la spécification de données de centrale (S009).

5. Le procédé de la revendication 4, sachant que les différences déterminées pour une ou plusieurs boucles de commande sont comparées à un seuil pour identifier un état de maintenance (420) pour une unité de processus associée auxdites une ou plusieurs boucles de commande.

6. Le procédé de la revendication 4, sachant que les différences déterminées pour une ou plusieurs boucles de commande sont utilisées pour identifier des défauts dans une ou plusieurs boucles de commande.

7. Le procédé de la revendication 1, sachant que le procédé est utilisé pendant une exploitation normale de la centrale.

8. Système de commande (300) pour une centrale thermique pour fournir de la puissance électrique pour satisfaire une demande, la centrale thermique comprenant des unités de processus et un ou plusieurs actionneurs, le système de commande comprenant :
a) une base de données (370) d'une liste de mise à disposition d'une spécification de données de centrale de paramètres de processus et de sorties de processus pour obtenir au moins une information de point de consigne pour fournir un point de consigne pour commander une ou plusieurs boucles de commande, sachant que la spécification de données de centrale est fournie par un fabricant des unités de processus ;
b) un module de correction de point de consigne (390) pour suivre des ajustements dans le point de consigne fourni sur la base de l'au moins une information de point de consigne pour réduire un écart afin de satisfaire la demande et mettre à jour la spécification de données de centrale dans la base de données ;
c) un module de calculateur de signaux à action directe (580) pour calculer des signaux à action directe sur la base de la spécification de données de centrale incluant des signaux d'actionneur (585), une valeur de demande (380) et une valeur de production effective (510) ; et
d) un module de commutation (560) pour fournir les signaux à action directe à l'un ou aux plusieurs actionneurs en tant que biais supplémentaire sur la base de l'importance de différences dans la valeur de demande et la valeur de production effective.
